# EUROPEAN PATENT APPLICATION

(11) **EP 3 646 813 A1**
(43) Date of publication of application: **06.05.2020**
(21) Application number: 18822919.9
(22) Date of filing: 14.06.2018
(51) Int. Cl.: A61C 15/02

(54) **INTERDENTAL CLEANING TOOL**

(30) Priority: 28.06.2017 JP 2017125741
(71) Applicant: Kobayashi Pharmaceutical Co., Ltd., Chuo-ku Osaka-shi, Osaka 541-0045 (JP)
(72) Inventor: KIKKAWA, Tasuku, Ibaraki-shi Osaka 567-0057 (JP)
(74) Representative: Hoffmann Eitle
(86) International application number: PCT/JP2018/022778
(87) International publication number: WO 2019/003949

(57) **Abstract**

To provide an interdental cleaning tool which can improve the cleaning property on a side surface of a tooth and between teeth with suppressing a decrease in insertability of a cleaning portion between teeth. An interdental cleaning tool (2) includes a base portion (10) having a shaft portion (20) and a grip portion (30), and a cleaning portion (40). The cleaning portion (40) has a cleaning portion main body (42) and a plurality of brush portions (44). Each of the brush portions (44) has a brush main body having a shape protruding outward from the cleaning portion main body in an axially intersecting direction, and a scraping step portion that protrudes from an outer circumferential surface of the brush main body in a direction orthogonal to the axially intersecting direction, the brush main body extending from a proximal end portion to a distal end portion of the brush main body and being formed to be flat.

## Description

### Technical Field

The present invention relates to an interdental cleaning tool.

### Background Art

Conventionally, an interdental cleaning tool for cleaning between teeth is known. For example, Patent Literature 1 discloses an interdental cleaning tool including a base portion which has a shape extending in a specific direction, and a cleaning portion which is made from an elastomer and capable of cleaning between teeth. The base portion has a shaft portion which is capable of being inserted between teeth and has a shape extending linearly, and a grip portion having a shape that is capable of being gripped by fingers. The cleaning portion includes a cleaning portion main body that covers a part of an outer circumferential surface of the shaft portion, and a plurality of brush portions connected to the cleaning portion main body. Each of the brush portions has a shape that protrudes outward from an outer circumferential surface of the cleaning portion main body in a direction orthogonal to the axial direction of the shaft portion. Each of the brush portions is formed in a conical shape.

### Citation List

### Patent Literature

Patent Literature 1: PCT International Publication No.2013/176297

### Summary of Invention

### Problems to be Solved by the Invention

In the interdental cleaning tool as described in Patent Literature 1, there is a need to improve the cleaning property (scraping performance) on a side surface of a tooth and between teeth. In view of the above, it is conceivable to enlarge a shape of each of the brush portions (thicken each of the brush portions). However, if the shape is enlarged, insertability of the cleaning portion between teeth is lowered.

An object of the present invention is to provide an interdental cleaning tool which can improve the cleaning property on a side surface of a tooth and between teeth with suppressing a decrease in the insertability of a cleaning portion between teeth.

### Means to Solve the Problem

In order to solve the above problems, the present invention provides an interdental cleaning tool including: a base portion including a shaft portion having a shape which extends in a specific direction to be capable of being inserted between teeth and includes an insertion end portion formed at one end in the specific direction and a proximal end portion formed at the other end in the specific direction, and a grip portion having a shape which extends from the proximal end portion so as to be apart from the shaft portion along the specific direction and is capable of being gripped by fingers; and a cleaning portion that is made from an elastomer having a hardness lower than a hardness of the base portion, the cleaning portion covering at least a part of the shaft portion and being capable of cleaning between teeth, wherein the cleaning portion includes: a cleaning portion main body that covers an outer circumferential surface of the shaft portion; and a plurality of brush portions connected to the cleaning portion main body, and each of the brush portions includes: a brush main body having a shape that protrudes outward from the cleaning portion main body in an axially intersecting direction which is a direction intersecting to the specific direction; and a scraping step portion that protrudes from an outer circumferential surface of the brush main body in a direction orthogonal to the axially intersecting direction, the scraping step portion extending from a proximal end portion to a distal end portion of the brush main body and being formed to be flat.

With regard to the interdental cleaning tool of the present invention, since the brush portion has the scraping step portion, when the cleaning portion is inserted and removed along an extending direction of interdental space, not only the brush main body but also the scraping step portion cleans a side surface of a tooth and between teeth. Therefore, as compared with a case where the entire brush portion is enlarged, a decrease in the insertability of the cleaning portion between teeth is suppressed, and the cleaning property on a side surface of a tooth and between teeth is improved.

In this case, the scraping step portion preferably includes: a first step portion connected to a specific portion of an outer edge of the brush main body when the brush main body is cut in a plane encompassing a center axis of the brush main body; and a second step portion connected to a portion of the outer edge of the brush main body when the brush main body is cut in the plane, the portion of the second step portion being on an opposite side to the specific portion with respect to the center axis of the brush main body on a straight line connecting the first step portion to the center axis of the brush main body.

In this manner, the scraping effect is improved by each of the step portions, and a side surface of a tooth and interdental space are cleaned more effectively.

Further, the first step portion and the second step portion may be oriented in different directions from each other on a plane orthogonal to the center axis of the brush portion.

Alternatively, the first step portion and the second step portion may be oriented in an identical direction on the plane orthogonal to the center axis of the brush portion.

The scraping step portion preferably has a shape protruding from the outer circumferential surface of the brush main body in a direction orthogonal to both the axially intersecting direction and the specific direction.

In this manner, a decrease in the insertability of the cleaning portion between teeth is further suppressed, and the cleaning property on a side surface of a tooth and between teeth is improved.

Further, with regard to the interdental cleaning tool,
a protrusion size of the scraping step portion from the outer circumferential surface of the brush main body is preferably 0.01 mm or more, more preferably 0.03 mm or more, even more preferably 0.1 mm or more, further preferably 0.15 mm or more, and particularly preferably 0.2 mm or more. Further, the protrusion size of the scraping step portion from the outer circumferential surface of the brush main body is preferably 0.8 mm or less, and more preferably 0.5 mm or less.

Further, with regard to the interdental cleaning tool, preferably, a size of the grip portion in a second direction, which is a direction orthogonal to both the specific direction and a first direction that is a direction orthogonal to the specific direction, is larger than a size of the grip portion in the first direction, and the plurality of brush portions include a cross brush portion having a shape protruding from the cleaning portion main body in a direction which is parallel to the axially intersecting direction and intersects to the second direction.

In this manner, a side surface of a molar is capable of being effectively cleaned especially at the time of cleaning interdental space between molars. In detail, in a case where a size of the grip portion in the second direction is larger than a size of the grip portion in the first direction (when the grip portion is flat), at the time of cleaning interdental space between molars, the cleaning portion often takes a posture to clean between teeth so that a longitudinal direction (second direction) of a cross section of the grip portion in a plane orthogonal to the axial direction of the shaft portion becomes substantially parallel to the vertical direction. In addition, in order to effectively clean side surfaces of the molars, the grip portion tends to be operated such that the cleaning portion is relatively strongly pressed against the side surface. With regard to the interdental cleaning tool of the present invention, the plurality of brush portions have the cross brush portion having a shape protruding in a direction that is parallel to the axially intersecting direction and intersects to the second direction, and the cross brush portion has the scraping step portion. Accordingly, a side surface of a molar is effectively cleaned.

Further, with regard to the interdental cleaning tool, each of the brush portions further preferably includes a distal scraping step portion that protrudes outward from the distal end portion of the brush main body when the brush main body is cut in a plane encompassing the center axis of the brush main body within the plane, the distal scraping step being flat.

In this manner, the interdental cleaning tool is operated to rotate around the center axis of the shaft portion in a state where the cleaning portion is inserted between teeth, so that the distal scraping step portion effectively cleans a side surface of a tooth and between the teeth.

Further, with regard to the interdental cleaning tool, a protrusion size of the distal scraping step portion from the distal end portion of the brush main body is preferably 0.01 mm or more, more preferably 0.03 mm or more, even more preferably 0.1 mm or more, further preferably 0.15 mm or more, and particularly preferably 0.2 mm or more. Further, the protrusion size of the distal scraping step portion from the distal end portion of the brush main body is preferably 0.8 mm or less, and more preferably 0.5 mm or less.

Further, with regard to the interdental cleaning tool, an outer diameter of the cleaning portion main body at a position, which is distant by 1.5 mm from a distal end of the cleaning portion toward the grip portion, is preferably 0.4 mm or more and 0.8 mm or less, more preferably 0.4 mm or more and 0.7 mm or less, further preferably 0.4 mm or more and 0.6 mm or less, and particularly preferably 0.4 mm or more and 0.56 mm or less.

Further, with regard to the interdental cleaning tool, a diameter of the shaft portion at the position, which is distant by 1.5 mm from a distal end of the cleaning portion toward the grip portion, is preferably 0.35 mm or more and 0.55 mm or less, more preferably 0.35 mm or more and 0.45 mm or less, and further preferably 0.35 mm or more and 0.41 mm or less.

Further, with regard to the interdental cleaning tool, the outer diameter of the cleaning portion main body at a position, which is distant by 10 mm from the distal end of the cleaning portion toward the grip portion, is preferably 0.4 mm or more, more preferably 0.5 mm or more, further preferably 0.6 mm or more, and particularly preferably 0.7 mm or more. Further, the outer diameter of the cleaning portion main body at the position, which is distant by 10 mm from the distal end of the cleaning portion toward the grip portion, is preferably 1.2 mm or less, more preferably 1.1 mm or less, further preferably 0.9 mm or less, and particularly preferably 0.85 mm.

Further, the diameter of the shaft portion at the position, which is distant by 10 mm from the distal end of the cleaning portion toward the grip portion, is preferably 0.35 mm or more, more preferably 0.5 mm or more, and further preferably 0.6 mm or more. Further, the diameter of the shaft portion at the position, which is distant by 10 mm from the distal end of the cleaning portion toward the grip portion, is preferably 0.8 mm or less, and preferably 0.7 mm or less.

In this manner, the above effect can be obtained even in a case where the interdental cleaning tool is relatively thin.

### Effect of the Invention

As described above, according to the present invention, an interdental cleaning tool which can improve the cleaning property on a side surface of a tooth and between teeth with suppressing a decrease in the insertability of a cleaning portion between teeth can be provided.

### Brief Description of Drawings

FIG. 1 is a front view of an interdental cleaning tool group according to an embodiment of the present invention.
FIG. 2 is a cross-sectional view taken along line II-II in FIG. 1.
FIG. 3 is a cross-sectional view taken along line III-III in FIG. 1.
FIG. 4 is a diagram schematically showing how the interdental cleaning tool is inserted between molars (back teeth).
FIG. 5 is a cross-sectional view taken along line II-II of a variation of a brush portion.

### Description of Embodiments

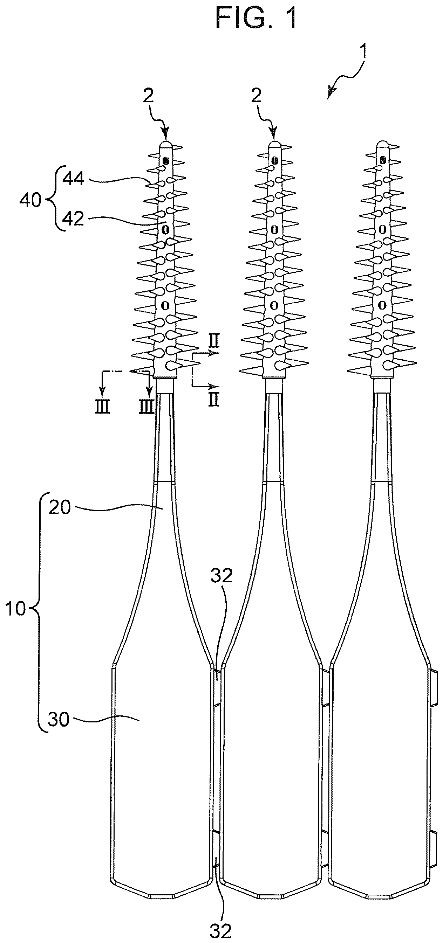

An interdental cleaning tool 2 according to an embodiment of the present invention is described with reference to FIGS. 1 to 4. FIG. 1 shows an interdental cleaning tool group 1 including a plurality (three in the present embodiment) of the interdental cleaning tools 2 connected to each other. The interdental cleaning tools 2 adjacent to each other are connected by a connection portion 32. Each of the interdental cleaning tools 2 includes a base portion 10 made from synthetic resin and a cleaning portion 40 made from an elastomer having a hardness lower than that of synthetic resin.

The base portion 10 includes a shaft portion 20 and a grip portion 30. The base portion 10 is formed of synthetic resin such as polypropylene, polyethylene, ABS, polybutylene terephthalate, polycarbonate, polyethylene terephthalate, polystyrene, polyacetal, polyamide, or the like. In the present embodiment, the base portion 10 is formed of polypropylene containing 30% by weight of glass fibers.

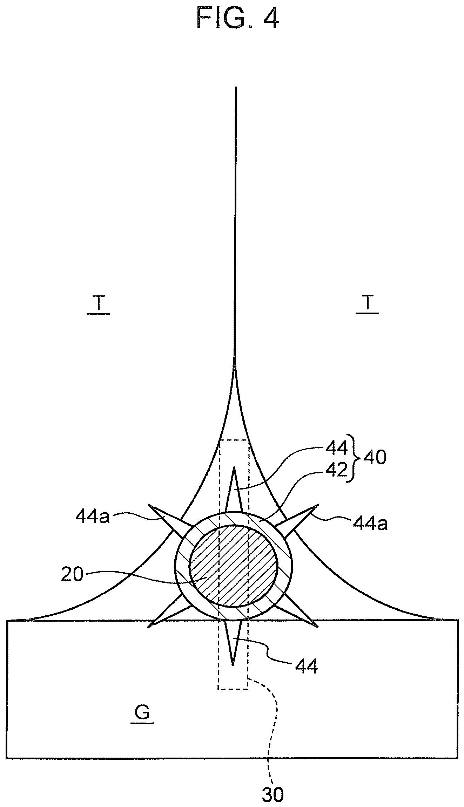

The shaft portion 20 has a shape which extends linearly along a specific direction (vertical direction in FIG. 1) and is capable of being inserted between teeth. An insertion end portion is formed at one end (upper end in FIG. 1) of the shaft portion 20, and a proximal end portion is formed at the other end of the shaft portion 20. The shaft portion 20 has a shape in which its outer shape gradually becomes smaller from the proximal end portion toward the insertion end portion. As shown in FIG. 4, a cross section of the shaft portion 20 in a plane orthogonal to an axial direction of the shaft portion 20 (hereinafter referred to as "axially orthogonal cross section") is circular.

The grip portion 30 extends along the axial direction of the shaft portion 20 so as to be apart from the proximal end portion of the shaft portion 20, and has a shape that is capable of being gripped by fingers. The grip portion 30 is formed to be flat. In detail, a size of the grip portion 30 in a second direction (left-right direction in FIG. 1), which is a direction orthogonal to both the specific direction and a first direction that is a direction orthogonal to the specific direction, is larger than a size of the grip portion 30 in the first direction.

The cleaning portion 40 is a portion for cleaning between teeth, and is formed of an elastomer having a hardness lower than the hardness of the base portion 10. In the present embodiment, a styrene elastomer is used as the elastomer. However, silicon, an olefin elastomer, a polyester elastomer, or the like may also be used as the elastomer. In the present embodiment, the cleaning portion 40 includes a cleaning portion main body 42 and a plurality of brush portions 44. Further, durometer hardness type A (JISK6253) as the hardness of the elastomer is preferably 10 to 50, more preferably 10 to 40. In the present embodiment, the durometer hardness type A is 35.

The cleaning portion main body 42 has a shape that covers at least a part of an outer circumferential surface of the shaft portion 20 (a portion including the insertion end portion). A length of the cleaning portion main body 42 in the axial direction of the shaft portion 20 is set to 15.5 mm. An outer diameter of the cleaning portion main body 42 at a position which is distant by 1.5 mm from a distal end of the cleaning portion 40 toward the grip portion 30, is 0.55 mm, and a diameter of the shaft portion 20 at the position, which is distant by 1.5 mm from the distal end of the cleaning portion 40 toward the grip portion 30, is 0.4 mm. Further, the outer diameter of the cleaning portion main body 42 at a position, which is distant by 10 mm from the distal end of the cleaning portion 40 toward the grip portion 30, is 0.85 mm, and the diameter of the shaft portion 20 at the position, which is distant by 10 mm from the distal end of the cleaning portion 40 toward the grip portion 30, is 0.67 mm.

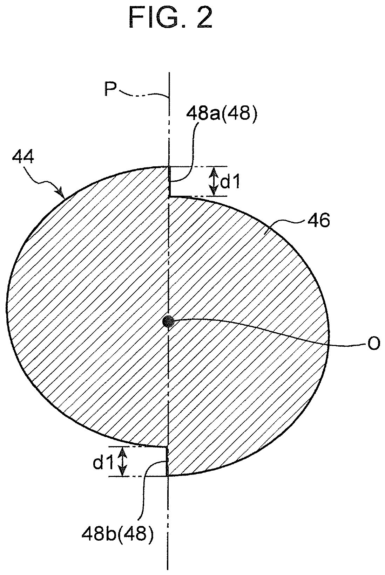

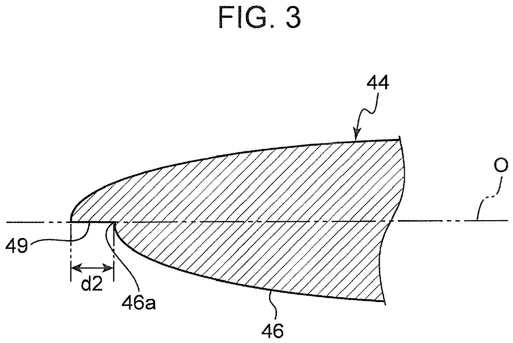

Each of the brush portions 44 is provided on an outer circumferential surface of the cleaning portion main body 42. As shown in FIGS. 2 and 3, each of the brush portions 44 has a brush main body 46, a scraping step portion 48, and a distal scraping step portion 49. In FIGS. 1 and 4, the illustration of the scraping step portion 48 and the distal scraping step portion 49 is omitted.

The brush main body 46 has a shape protruding outward from the outer circumferential surface of the cleaning portion main body 42 in an axially intersecting direction which is a direction that intersects to the axial direction of the shaft portion 20. Preferably, the brush main body 46 has a shape that protrudes outward from the outer circumferential surface of the cleaning portion main body 42 in an axially orthogonal direction which is orthogonal to the axial direction of the shaft portion 20, so that the outer shape gradually becomes smaller as the distance from the cleaning portion main body 42 increases. In the present embodiment, each of the brush main bodies 46 is formed in a conical shape.

As shown in FIG. 2, the scraping step portion 48 protrudes from an outer circumferential surface of the brush main body 46 in a direction orthogonal to the axially orthogonal direction (in the embodiment, a direction in parallel to the specific direction), the scraping step portion 48 extending from a proximal end portion to a distal end portion of the brush main body 46 and being formed to be flat. The scraping step portion 48 includes a first step portion 48a and a second step portion 48b. The first step portion 48a is connected to a specific portion of an outer edge of the brush main body 46 (an upper end portion in FIG. 2 in the present embodiment) when the brush main body 46 is cut along a plane P encompassing the center axis O of the brush main body 46. The second step portion 48b is connected to a portion of the outer edge of the brush main body 46 when the brush main body 46 is cut along the plane P, the portion of the second step portion being on the opposite side to the specific portion with respect to the center axis O on a straight line connecting the first step portion 48a and the center axis O of the brush main body 46. In the present embodiment, the first step portion 48a and the second step portion 48b are oriented in different directions on a plane orthogonal to the center axis O of the brush main body 46. A protrusion size d1 of each of the step portions 48a and 48b from the outer circumferential surface of the brush main body 46 is 0.025 mm.

The distal scraping step portion 49 protrudes outward from the distal end portion of the brush main body 46 when the brush main body 46 is cut along a plane encompassing the center axis O of the brush main body 46 (in the present embodiment, a plane that encompasses the center axis O and is orthogonal to the center axis of the shaft portion 20) within the plane, the distal scraping step portion 49 being formed to be flat. A protrusion size d2 of the distal scraping step portion 49 from a distal end 46a of the brush main body 46 is 0.035 mm.

A diameter of a proximal end portion of the brush main body 46 in a cross section of the brush portion 44 in a plane orthogonal to the center axis O of the brush main body 46 is 0.2 mm. A lower limit value of the diameter is preferably set to 0.1 mm, and more preferably set to 0.15 mm, from the viewpoint of suppressing a decrease in the insertability between teeth and improving the cleaning property on a side surface of a tooth and between teeth. An upper limit value of the diameter is preferably set to 1 mm, more preferably set to 0.7 mm, further preferably set to 0.5 mm, and particularly preferably set to 0.4 mm, from the viewpoint of suppressing a decrease in the insertability between teeth and improving the cleaning property on a side surface of a tooth and between teeth.

A length from the proximal end portion to a distal end portion of the brush main body 46 when the brush main body 46 is cut along a plane encompassing the center axis O of the brush main body 46 is 0.5 mm. A lower limit value of the length is preferably set to 0.1 mm, and more preferably set to 0.3 mm, from the viewpoint of suppressing a decrease in the insertability between teeth and improving the cleaning property on a side surface of a tooth and between teeth. An upper limit value of the length is preferably set to 2.5 mm, more preferably set to 2 mm, further preferably set to 1.8 mm, and particularly preferably set to 1.7 mm, from the viewpoint of suppressing a decrease in the insertability between teeth and improving the cleaning property on a side surface of a tooth and between teeth. Further, the length of the brush main body 46 is preferably gradually shortened from the grip portion side to the distal end side of the cleaning portion main body 42.

As shown in FIG. 4, the plurality of brush portions 44 include a cross brush portion 44a having a shape which protrudes from the cleaning portion main body 42 in a direction that is parallel to the axially intersecting direction (in the present embodiment, parallel to the axially orthogonal direction) and intersects to the second direction (vertical direction in FIG. 4).

Next, with reference to FIG. 4, a case where the interdental cleaning tool 2 described above is used to clean between, for example, molars (back teeth) T is described. When an interdental space between the molars T is cleaned with the interdental cleaning tool 2 including the grip portion 30 formed to be flat and the shaft portion 20 having a linearly extending shape as in the present embodiment, a user of the interdental cleaning tool 2 often inserts the cleaning portion 40 into an oral cavity toward the interdental space between the molars T in a state in which the grip portion 30 is gripped in an orientation in which a longitudinal direction (vertical direction in FIG. 4) of the axially orthogonal cross section of the grip portion 30 is substantially vertical. Then, the user operates the grip portion 30 so that the cleaning portion 40 moves between the teeth. At this time, a side surface of the molar T exists at a position which is distant from the cleaning portion main body 42 in a direction that intersects to the longitudinal direction (second direction) of the axially orthogonal cross section of the grip portion 30. However, since a plurality of the brush portions 44 of the interdental cleaning tool 2 of the present embodiment have the cross brush portion 44a having a shape protruding from the cleaning portion main body 42 in a direction that intersects to the second direction of the axially orthogonal cross section, the side surface of the molar T is effectively cleaned. In detail, when the cleaning portion 40 is inserted and removed along the interdental space, the scraping step portion 48 of each of the brush portions 44 (particularly the cross brush portion 44a) cleans a side surface of the molar T and between teeth.

Further, the interdental cleaning tool 2 of the present embodiment has the distal scraping step portion 49. Accordingly, when the interdental cleaning tool 2 is operated to rotate around the center axis of the shaft portion 20 in a state where the cleaning portion 40 is inserted between teeth, the distal scraping step portion 49 cleans a side surface of a tooth and between teeth.

The embodiment disclosed this time should be considered to be illustrative and not to be restrictive in all aspects. The scope of the present invention is shown not by the above description of the embodiment, but by the scope of claims, and further includes all modifications within the meaning and scope equivalent to the scope of claims.

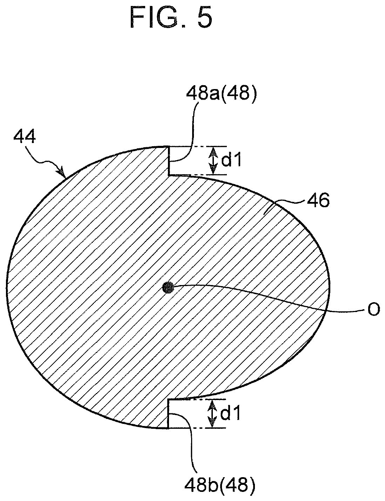

A shape of the scraping step portion 48 of the brush portion 44 is not limited to the above example. For example, as shown in FIG. 5, the step portions 48a and 48b may be oriented in an identical direction in a plane orthogonal to the center axis O of the brush main body 46.

Further, for example, the scraping step portion 48 may protrude from the outer circumferential surface of the brush main body 46 in a direction that is orthogonal to the axially orthogonal direction and intersects to the axial direction of the shaft portion 20.

### Reference Signs

- 1: interdental cleaning tool group
- 2: interdental cleaning tool
- 10: base portion
- 20: shaft portion
- 30: grip portion
- 40: cleaning portion
- 42: cleaning portion main body
- 44: brush portion
- 44a: cross brush portion
- 46: brush main body
- 48: scraping step portion
- 48a: first step portion
- 48b: second step portion
- 49: distal scraping step portion

## Claims

1. An interdental cleaning tool comprising:
a base portion including a shaft portion having a shape which extends in a specific direction to be capable of being inserted between teeth and includes an insertion end portion formed at one end in the specific direction and a proximal end portion formed at the other end in the specific direction, and a grip portion having a shape which extends from the proximal end portion so as to be apart from the shaft portion along the specific direction and is capable of being gripped by fingers; and
a cleaning portion that is made from an elastomer having a hardness lower than a hardness of the base portion, the cleaning portion covering at least a part of the shaft portion and being capable of cleaning between teeth, wherein
the cleaning portion includes:
a cleaning portion main body that covers an outer circumferential surface of the shaft portion; and
a plurality of brush portions connected to the cleaning portion main body, and
each of the brush portions includes:
a brush main body having a shape that protrudes outward from the cleaning portion main body in an axially intersecting direction which is a direction intersecting to the specific direction; and
a scraping step portion that protrudes from an outer circumferential surface of the brush main body in a direction orthogonal to the axially intersecting direction, the scraping step portion extending from a proximal end portion to a distal end portion of the brush main body and being formed to be flat.

2. The interdental cleaning tool according to claim 1, wherein
the scraping step portion includes:
a first step portion connected to a specific portion of an outer edge of the brush main body when the brush main body is cut in a plane encompassing a center axis of the brush main body; and
a second step portion connected to a portion of the outer edge of the brush main body when the brush main body is cut in the plane, the portion of the second step portion being on an opposite side to the specific portion with respect to the center axis of the brush main body on a straight line connecting the first step portion to the center axis of the brush main body.

3. The interdental cleaning tool according to claim 2, wherein
the first step portion and the second step portion are oriented in different directions from each other on a plane orthogonal to the center axis of the brush portion.

4. The interdental cleaning tool according to claim 2, wherein
the first step portion and the second step portion are oriented in an identical direction on a plane orthogonal to the center axis of the brush portion.

5. The interdental cleaning tool according to any of claims 1 to 4, wherein
a protrusion size of the scraping step portion from the outer circumferential surface of the brush main body is 0.01 mm or more and 0.8 mm or less.

6. The interdental cleaning tool according to any of claims 1 to 5, wherein
a size of the grip portion in a second direction, which is a direction orthogonal to both the specific direction and a first direction that is a direction orthogonal to the specific direction, is larger than a size of the grip portion in the first direction, and
the plurality of brush portions include a cross brush portion having a shape protruding from the cleaning portion main body in a direction that is parallel to the axially intersecting direction and intersects to the second direction.

7. The interdental cleaning tool according to any of claims 1 to 6, wherein
each of the brush portions further includes a distal scraping step portion that protrudes outward from the distal end portion of the brush main body when the brush main body is cut in a plane encompassing the center axis of the brush main body within the plane, the distal scraping step being flat.

8. The interdental cleaning tool according to any of claims 1 to 7, wherein
an outer diameter of the cleaning portion main body at a position, which is distant by 1.5 mm from a distal end of the cleaning portion toward the grip portion, is 0.4 mm or more and 0.8 mm or less, and a diameter of the shaft portion at the position, which is distant by 1.5 mm from the distal end of the cleaning portion toward the grip portion, is 0.35 mm or more and 0.55 mm or less, and
the outer diameter of the cleaning portion main body at a position, which is distant by 10 mm from the distal end of the cleaning portion toward the grip portion, is 0.4 mm or more and 1.2 mm or less, and the diameter of the shaft portion at the position, which is distant by 10 mm from the distal end of the cleaning portion toward the grip portion, is 0.35 mm or more and 0.8 mm or less.
